Europäisches Patentamt

European Patent Office

Office européen des brevets

(19)

(11) Publication number: **0 154 959**
A2

# EUROPEAN PATENT APPLICATION

(12)

(21) Application number: 85102735.9

(22) Date of filing: 11.03.85

(51) Int. Cl.⁴: **A 23 K 1/00,** A 23 K 1/10,
A 23 K 1/14, A 23 K 3/00

(30) Priority: 14.03.84 IT 2004484

(71) Applicant: **DOX-AL ITALIA S.p.A., Via E. Fermi 2,
I-20050 Correzzana Milano (IT)**

(43) Date of publication of application: 18.09.85
Bulletin 85/38

(72) Inventor: **Grabitz, Ernst, Via S. Eurosia 8/d, Casatenovo
(Como) (IT)**

(84) Designated Contracting States: **AT BE CH DE FR GB LI
LU NL SE**

(74) Representative: **Gervasi, Gemma et al, Studio Brevetti e
Marchi NOTARBARTOLO & GERVASI 33, Viale Bianca
Maria, I-20122 Milano (IT)**

(54) Complete, integrated liquid feed for livestock use.

(57) A complete, integrated, storage-stable feed of liquid
consistency for livestock farms, comprising nutrient sub-
stances of vegetable and animal origin dissolved or dis-
persed in aqueous liquid, together with stabilisers of anti-
fermenting, antimycotic and mould-resistant action, non-
ionic surface-active agents of emulsifying and dispersing
action, antifreezing and fluidising agents, antioxidants for
food use suitable for inhibiting the oxidative degradation of
the nutrient components, and possibly thickening agents.

ACTORUM AG

0154959

- 1 -

# COMPLETE, INTEGRATED LIQUID·FEED FOR LIVESTOCK USE

This invention relates to a complete, integrated storage-stable liquid feed for livestock use comprising nutrient substances of animal and vegetable origin dissolved or dispersed in aqueous liquid. In livestock farms for meat and milk production, cattle feeding costs are known to generally exceed 50% of the total production cost. For economical farm management it is therefore obviously important to provide a low-cost feed which at the same time ensures best farm performance. The fundamental requirement in this respect is that the nutrients contained in it are balanced.

Balanced solid feeds are known which are able to satisfy the feeding requirements of the various animal species, and are obtained from various raw materials of vegetable and/or animal origin.

In order to possess good storage stability, such solid feeds must have a low water content. This requires drying the raw materials and/or mixture, an operation which weighs heavily on the cost of this type of feed.

Liquid feeds mainly of vegetable origin are also known, these sometimes comprising low-cost by-products either in single form (molasses) or compound form (for example molasses plus protein concentrate, molasses plus soluble maize extracts).

0154959

These liquid feeds, which do not require drying of the components, have the advantage of a very low production cost. On the other hand, the known products of this type have drawbacks from the food aspect in that they are unbalanced, and in particular those based on by-products of the sugar industry have a high potassium salt content which limits the amount which can be administered daily to the animals. In practice, with this type of feed it is not possible to administer more than 2 kg/day per head of cattle, in that higher quantities give rise to health problems which negatively affect the overall yield of the farm in terms of meat and milk.

Consequently the use of liquid feeds of known type is integrated with substantial quantities of solid feeds, of considerably higher cost.

The object of the present invention is to provide a complete, ie multi-component feed which is integrated and comprises additives, and is prepared from raw materials of vegetable and animal origin, its mineral salt content, and in particular potassium salt content being such as to in no way limit the quantity which can be administered daily to animals, the feed being in the form of a homogeneous liquid.

An essential requirement of this product is high storage stability at ambient temperatures ranging from very low (-20°C) to very high (+50°C) for long periods of more than six months and up to more than one year.

The liquid feed according to the invention is constituted substantially by a homogeneous, stable aqueous dispersion comprising:

- various nutrient substances of vegetable and animal origin, of a type either soluble or insoluble in water, and present in quantities which are proportioned in such a manner as to obtain a complete balanced feed;
- non-ionic surface-active agents of dispersing and solubilising action able to homogeneously disperse the water-insoluble components in the aqueous liquid;
- anti-fermenting agents compatible with the food use of the product, consisting of organic acids able to create acidity conditions such as to inhibit fermentation reactions and mould development, and also able to provide a bacterial effect;
- antioxidants able to inhibit degradation of the nutrients by oxidation by atmospheric oxygen. They are choses from known antioxidants compatible with the food use of the product;
- antifreezing agents for maintaining the product liquid at temperatures less than 0°C. They are chosen from those known agents compatible with the food use of the product, such as glycerol, glycol, polyethylene glycols;
- flavourings able to give the product a taste pleasant to cattle.

A further additive which is very useful in many cases is constituted by:
- thickening agents for the aqueous liquid which improve the storage stability of the aqueous dispersion by preventing the sedimentation of solid products and incrustations, and which can also adjust the viscosity of the final product to optimum standard values even though this uses raw materials which have a consistency and physical characteristics which vary within wide limits.

The feed according to the present invention is integrated by adding vitamins and mineral salts in optimum quantities and proportions. A very advantageous integrating additive for this type of feed is a metabolically active preparation obtained from yeasts and available commercially under the brand name THEPAX of the present applicant.

By virtue of the specific additives contained in it, the feed according to the invention enables the following substances to be used as raw materials with nutrient properties:

a) Raw materials of vegetable origin:
- molasses of various origins (sugarbeet, sugar cane, citrus fruits)
- by-products of molasses processing (distillation, fermentation)
- yeasts
- by-products of beer processing
- by-products of vegetable fat processing
- extracted or pressed juices of vegetable products
- by-products of cereal fermentation
- by-products of fruit juice preparation, vegetable concentrate preparation and vegetable distillation
- protein residues of enzymatic fermentation

b) Raw materials of animal origin:
- by-products of meat processing
- by-products of fish processing
- by-products of hide processing
- by-products of feather processing
- by products of animal viscus processing
- blood
- acid or sweet milk whey

0154959

The nutritive raw materials used in the product according to the invention are selected in order to obtain a feed of high nourishing content. In particular as raw nutritive materials are preferred molasses in an amount corresponding to at least 15% by weight of the total dry substances in the final product and liquid by-products of molasses processes in amount corresponding to at least 30% by w. of the total dry substances, the total amount of both ingredients being at least 50% by w.

The product according to the invention may contains little amount of fat substances, lower than 2% by w.

The said raw materials have already been at least partly used in solid feeds. However in such cases they do not represent economically convenient products as the removal of water from said waste materials is an expensive operation.

According to the present invention a stable liquid feed is obtained without necessity of total removal of water from the raw starting material: in fact it is possible to obtain a final product containing up to 50% by w. of water.

Because of the fact that the feed according to the invention uses nutrient substances of various types and of both animal and vegetable origin which are very different from each other, and easily subject (particularly those of animal origin) to degradation and fermentation in an aqueous environment, the choice of stabilisers and antioxidants is important in obtaining a product with the characteristics according to the invention.

Suitable antioxidants can be chosen from:

- L-ascorbic acid, including its sodium or calcium salt

- acetyl-5,6-L-ascorbic acid

- palmityl-6-L-ascorbic acid

- natural extracts rich in tocopherol

- tocopherols in general

- octyl, dodecyl or propyl gallate

- butyloxyanisole

- butyloxytoluene

- ethoxyquin

Stabilisers of antifermenting action can be chosen from:

- formic, acetic, propionic, lactic, sorbic, fumaric, tartaric, citric, benzoic or phosphoric acid, possibly in the form of their salts

- alkylesters of p.hydroxybenzoic acid

- formaldehyde

Another technical problem solved by the present invention is that of providing a homogeneous, fluid, water-based mixture free from the tendency to form deposits of solid substances or to unmix into separate liquid phases, while using as raw materials substances which are very different from each other in terms of specific gravity and aggregation state, and some of which are insoluble in water or even of hydrophobic nature (fats). Another important requirement is high wetting power which allows easy mixing and homogenisation with the other components of the overall feeding ration, which can be of various origins and different in terms of form and consistency.

These objectives have been attained according to the present invention by using specific non-ionic surface-active agents which provide a dispersing and emulsifying action and are compatible with food use, and also by the use of suitable thickening agents which prevent solids sedimenting in a non-resuspendable form and also enable optimum standard viscosity values to be obtained, even when the characteristics of the raw materials used vary.

Proper surface active agents for the product of the invention are non toxic, assimilable substances of the class of derivatives of fatty acids, compatible with food use, compresed in the following substances:

- mono, di or triesters of sorbitol with fatty acids compatible with food use, such as lauric, palmitic, stearic and oleic acid
- esters of fatty acids with polyoxyethylene sorbitol. The fatty acids can for example be oleic, stearic, palmitic or lauric acid. The commercial product Tween 80 is an example
- monoesters of foodstuff fatty acids with propylene glycol, possibly in mixture with diesters
- mono and diglycerides of foodstuff fatty acids
- acetic, lactic, citric, monoacetyltartaric and diacetyltartaric ester of mono and diglycerides of foodstuff fatty acids
- sucroglycerides: mixture of sucresters, esters of monosaccharides with fatty acids, and of mono and diglycerides of foodstuff fatty acids
- non-polymerised polyglyceride esters of foodstuff fatty acids
- stearyl-2-lactyl acid
- sodium stearoyl-lactyl-2-lactate
- calcium stearoyl-lactyl-2-lactate
- glycerol polyethyleneglycolether ricinoleate
- polyethyleneglycol esters of soy oil fatty acids
- polyglycerol ethers with alcohols obtained by reducing oleic and palmitic acids.

The thickening agents suitable for preparing the feed according to the invention can be chosen from those compatible with food use, namely:

- lecithins
- alginic acids and their sodium, potassium, calcium and ammonium salts
- esters of alginic acids and propylene glycol
- Agar-Agar
- carrageen, carrageenates
- carob seed meal
- tamarind seed meal
- guar seed meal
- guar gum
- tragacanth
- gum arabic
- pectins
- methylcellulose
- ethylcellulose
- hydroxypropylcellulose
- carboxymethylcellulose   as such or as its sodium salt

The flavourings for use in preparing the feed according to the present invention are chosen from those of natural or synthetic origin compatible with food use, as allowed by the current foodstuff regulation.

By virtue of its physical consistency, viscosity and specific gravity characteristics and the additives contained therein, the feed according to the present invention can be easily transferred by positive displacement pumps and metered by metering pumps.

It is also easily miscible with other normal feeds by virtue of its high wetting power.

The liquid feed according to the present invention can be obtained with a high dry substance content and thus with high nutrient power per unit of weight. Products of excellent characteristics are obtained having a water content of between 35% and 50% by weight.

The following example is given for illustrative purposes only, and is not to be considered as limitative of the implementation of the invention.

EXAMPLE

The basic nutrients used in the present example are:

a) protein effluent deriving from the processing of meat hydrolysed at low temperature (composition as such: water 40%, proteins 46%, ash 13%), 28 parts by weight

b) concentrated sugar cane or sugarbeet molasses pulp with its potassium removed (indicative composition: water 42%, proteins 21%, ash 10%), 40 parts by weight

c) sugar cane or sugarbeet molasses (indicative composition: water 18%, proteins 6%, ash 9%), 30 parts by weight

The mixing procedure was carried out in 4 stages in accordance with the method and sequence indicated hereinafter.

The resultant product has a specific gravity of about 1.3, a viscosity of 4.1 degrees Engler, a water content of 35/40%, and a protein content of 20/25%, and if required can be fed with further additives in the form of auxins and growth factors such as flavophospholipol, monensin, nitrovin, virginiamycin, ionophore molecules and the like.

Preparation of the vitamin concentrate

The following are fed into a 200 kg dissolving vessel:

- 30 kg of glycerol polyethyleneglycol ricinoleate

- 10 kg of 1,2-propanediol

The mixture is heated to 50°C, and the following are added:

- 1 kg of butyloxytoluene

- 2.590 kg of vitamin A palmitate 1.7 ML

- 0.160 kg of vitamin D3 oil 2 ML

- 1.100 kg of vitamin E oil

The mixture is agitated for 10 minutes and the temperature again controlled at 50°C. The following are dissolved separately in 120 kg of purified water at ambient temperature under continuous agitation:

- 4800 kg of vitamin B2 phosphate

- 6.600 kg of panthenol

- 2 kg of sodium sorbate

The solution obtained in this manner is added slowly under agitation to the mixture prepared in the 200 kg dissolving vessel.

The entire mixture is cooled to 20°C. The pH is checked and corrected with propionic acid (final pH 5.5-6). The contents of the dissolving vessel are discharged into suitable sealed containers, each of 25 kg.

Preparation of the mineral concentrate

The following are fed under agitation into the 200 kg dissolving vessel:

- 112.135 kg of purified water at ambient temperature

- 18 kg of 35% zinc sulphate

- 15.525 kg of 32% manganese sulphate

- 4 kg of 25% copper sulphate

- 10 kg of glycerol

- 2 kg of citric acid.

- 0.119 kg of 21% cobalt sulphate

- 0.121 kg of 62% calcium iodate

- 2 kg of sorbitol monolaurate

- 3 kg of sorbitol monooleate

- 0.500 kg of carboxymethylcellulose

- purified water to make up to 200 kg


Preparation of the premix

The following are fed into a 3500 kg dissolving vessel under agitation at ambient temperature:

- 200 kg of mineral concentrate

- 3000 kg of protein lysate from meat processing residues (see item a above)

- 25 kg of vitamin concentrate

- 6.250 kg of nicotinamide

- 150 kg of orthophosphoric acid (75%)

- protein lysate to make up to 3500 kg


Preparation of the mixture

The contents of the 3500 kg dissolving vessel are transferred slowly under agitation into a 25000 kg dissolving vessel.


The following are then added slowly under agitation:

- 4380 kg of protein lysate

- 10000 kg of concentrated, potassium-removed sugar cane molasses pulp

- 7000 kg of sugar cane molasses


Before the latter  introduction, an antifoaming agent in the form of physiologically inert silicone  oils is added in the proportion of 1 : 16600.

- 12 -

0154959

On termination, the density and viscosity are checked, and these may have to be adjusted with thickening agents (carboxymethyl cellulose) or fluidising agents (polyethylene glycols). The pH is adjusted to 5.5 with propionic acid. Prescribed density 1.267, viscosity at 20°C 4.07 degree Engler.

The final mixture remains perfectly homogeneous and unaltered for very long time periods. It can be easily metered by means of metering pumps and mixed with conventional feeds, for example with cereals in meal, crushed, pressed, flaked or extruded form, with seed extraction cake in the form of meal, flakes, pellets and granulates, with vegetable processing by-products in the form of meal, pellets etc., or with mineral products, forage and straw in the form of chopped pieces, pellets, or in their original form etc.

Claims

1. A complete integrated feed for livestock farms, consisting of a homogeneous liquid with long term storage stability and which can be transferred by pump, containing 35% ÷ 50% by weight of $H_2O$ and comprising:
   - water-soluble or -insoluble nutrient substances of vegetable and animal origin in the form of a homogeneous aqueous dispersion;
   - non-ionic surface active agents having dispersing and solubilizing action able to give the final product high wething power, non toxic and assimilable, of the class of derivatives of fatty acids compatible with the food use;
   - antifermenting agents compatible with the food use of the product and able to inhibit fermentation and mould development;
   - antioxidants able to inhibit oxidative degradation of the nutrient components;
   - flavouring additives;
   - antifreezing agents compatible with the food use of the product.

2. A complete integrate feed according to claim 1 comprising a thickening agent of the type compatible with food use.

3. A complete integrated feed according to claim 1, which comprises as nutrient substances, molasses in amount corresponding to at least 15% by weight of the total dry substances in the final product and liquid by-products of molasses processes in amount corresponding to al least 30% by weight on the total dry substances; the amount of fat substances being lower than 2% by weight.

4. A complete integrated feed according to claim 1, comprising phosphoric acid as an antifermenting agent.